# EUROPEAN PATENT SPECIFICATION

(11) **EP 2 081 385 B1**
(45) Date of publication and mention of the grant of the patent: **01.01.2014**
(21) Application number: 08010398.9
(22) Date of filing: 06.06.2008
(51) Int. Cl.: H04N 5/445, H04H 60/46, H04H 60/65, H04H 60/74, H04N 21/45, H04N 21/478

(54) **Application execution terminal**
Endgerät zur Anwendungsausführung
Terminal d'exécution d'application

(30) Priority: 15.01.2008 JP 2008005841
(43) Date of publication of application: 22.07.2009
(73) Proprietor: Mitsubishi Electric Corporation, Chiyoda-ku Tokyo 100-8310 (JP)
(72) Inventor: Imai, Shigeru, Tokyo 100-8310 (JP); Akatsu, Shinji, Tokyo 100-8310 (JP); Matsubara, Masami, Tokyo 100-8310 (JP); Miura, Shin, Tokyo 100-8310 (JP); Hanada, Takehiko, Tokyo 100-8310 (JP); Sakaguchi, Hiroki, Tokyo 100-8310 (JP)
(74) Representative: Pfenning, Meinig & Partner GbR

(56) References cited:
- EP-A1- 1 530 349
- EP-A2- 1 018 840
- WO-A2-01/72040
- US-A1- 2007 271 589

## Description

### BACKGROUND OF THE INVENTION

### Field of the Invention

The present invention relates to an application execution terminal which receives a content containing a video or an audio and playbacks the content, and which also executes an application which provides related information about the content.

### Description of Related Art

For example, patent reference 1 discloses a system which receives video content data via a network, such as a cable network or a radio network, playbacks the video content, and presents the video content as well as information on an advertisement (a commercial) related to the video content or the like. This system is provided with an information distribution server which distributes a video content and meaning information in which the description of each semantic unit of the video content are described, a related information server which distributes related information about the video content in response to a request, and a client terminal which receives the video content and playbacks this content. The client terminal disclosed by patent reference 1 is provided with a rule which predetermines the type of related information and a timing at which the related information is to be presented while the related information is associated with meaning information, and a user profile in which the user's preference and interest are described.

When receiving video content data and meaning information about this video content data from the information distribution server, the client terminal refers to the above-mentioned rule and the above-mentioned user profile on the basis of this meaning information, and then makes a request of the related information server for related information corresponding to the above-mentioned meaning information. By doing in this way, the client terminal can present the meaning information and the related information according to the user' s preference, as well as the video content, to the user in agreement with the contents of the video content and at an effective timing.

The system disclosed by patent reference 1 is further provided with a reaction response unit for making the user's preference and interest reflected in the user profile in response to an input operation by the user. The system can therefore evaluate the related information which is presented to the user via the client terminal by using the reaction response unit so as to update the user profile according to the description of the evaluation.

[Patent reference 1] JP,2002-101406,A

The above-mentioned conventional system can change the type of the related information which is presented to the user when the user watches the video content by updating the user profile using the reaction response unit. For example, assumes a case in which when the video content which the user is watching comes near to an image about a hot weather scene, a commercial about beer is to be presented as a commercial about drinks. In this case, if the user does not like such a commercial about beer, the conventional system can modify the user profile by using the reaction response unit in such a way as to present a commercial about juice.

However, the conventional system does not take into consideration offering a suggestion to present plural pieces of related information for one description of a specific video content while associating the plural pieces of related information with the one description for the user, and additional registration of related information which is explicitly suggested to the user into the user profile.

For example, when playing back a video content showing a hot weather scene, the conventional system cannot simultaneously present, as related information, both a commercial about beer and a commercial about juice to the user. Furthermore, the user cannot update the user profile by himself or herself in such a way that such a video content showing a hot weather scene is associated with both a commercial about beer and a commercial about juice.

Thus, a problem with conventional systems is that when a user watches a content which is received via either a broadcast wave or a communications network and is played back, the user cannot know variations in the related information which is adapted to the description and the watching time period of the content, and therefore no related information which really matches up with the user's preference cannot be presented to the user.

Document WO 01/72040 A2 describes a media display system which is able to enhance content by recognizing patterns in the media signal and to modify the media signal responsively to the recognized patterns. The modification is based on user preferences and the correlated enhanced content. The enhanced content is superimposed on video or audio outputs.

Document EP 1 530 349 A1 describes a communication terminal and in particular a cellular phone capable of receiving a TV production. The communication terminal stores an incoming-reporting condition on the basis of which the precedence among the video reproduction and the operation to report an incoming is determined.

### SUMMARY OF THE INVENTION

The present invention is made in order to solve the above-mentioned problem, and it is therefore an object of the present invention to provide an application execution terminal which, when a user watches a content, can present related information which really matches up with the user' s preference at a timing which is appropriate for the description of the content or the watching time period.

In accordance with the present invention, there is provided an application execution terminal including: an event detection unit for, on the basis of event detection rules in which event detection conditions are described for various events, respectively, detecting an event which matches up with one of the event detection conditions in the reception and playback of the content by the content processing unit; a profile storage unit for storing profiles in each of which an application associated with an event is registered; an event processing rule storage unit for storing event processing rules in which a description of a suggestion which is to be made in response to occurrence of an event is described; an application execution unit for starting and executing an application in response to a start request; and an application start control unit for making a suggestion to start either an application or a profile which is associated with the event detected by the event detection unit on the basis of the event processing rules, and for making a request of the application execution unit to start either the application for which the suggestion is accepted or an application registered into the profile for which the suggestion is accepted.

The application execution terminal in accordance with the present invention thus makes a suggestion to start either an application or a profile which is associated with an event detected in the reception and playback of the content on the basis of the event processing rules in which the description of a suggestion which is to be made in response to occurrence of an event is described, and, when the suggestion is accepted, makes a request of the application execution unit to start either the application or an application registered into the profile. By doing in this way, the application execution terminal in accordance with the present invention offers an advantage of being able to make a suggestion to start an application which presents the user with related information at a timing at which there occurs an event which matches up with an event detection condition related to the description of the content or the watching time period, and therefore can present related information which really matches up with the user's preference to the user.
Further objects and advantages of the present invention will be apparent from the following description of the preferred embodiments of the invention as illustrated in the accompanying drawings.

### BRIEF DESCRIPTION OF THE DRAWINGS

Fig. 1 is a block diagram showing the structure of an application execution terminal in accordance with Embodiment 1 of the present invention;
Fig. 2 is a sequence diagram showing the operation of the application execution terminal shown in Fig. 1;
Fig. 3 is a diagram showing an example of an event detection rule;
Fig. 4 is a diagram showing an example of the event processing rule;
Fig. 5 is a flow chart showing a flow of an event processing check carried out by an application start control unit shown in Fig. 1;
Fig. 6 is a diagram showing an example of display of a suggestion about start of a profile;
Fig. 7 is a diagram showing an example of profile information;
Fig. 8 is a diagram showing an example of display of a result of execution of an application by a user interface unit shown in Fig. 1;
Fig. 9 is a sequence diagram showing the operation of an application execution terminal in accordance with Embodiment 2 of the present invention;
Fig. 10 is a flow chart showing a flow of an event processing check carried out by an application start control unit of Embodiment 2;
Fig. 11 is a diagram showing an example of an event processing rule;
Fig. 12 is a diagram showing an example of display of a suggestion of registration of an application; and
Fig. 13 is a diagram showing an example of display of a suggestion of an autostart of a profile.

### DETAILED DESCRIPTION OF THE PREFERRED EMBODIMENTS

### Embodiment 1.

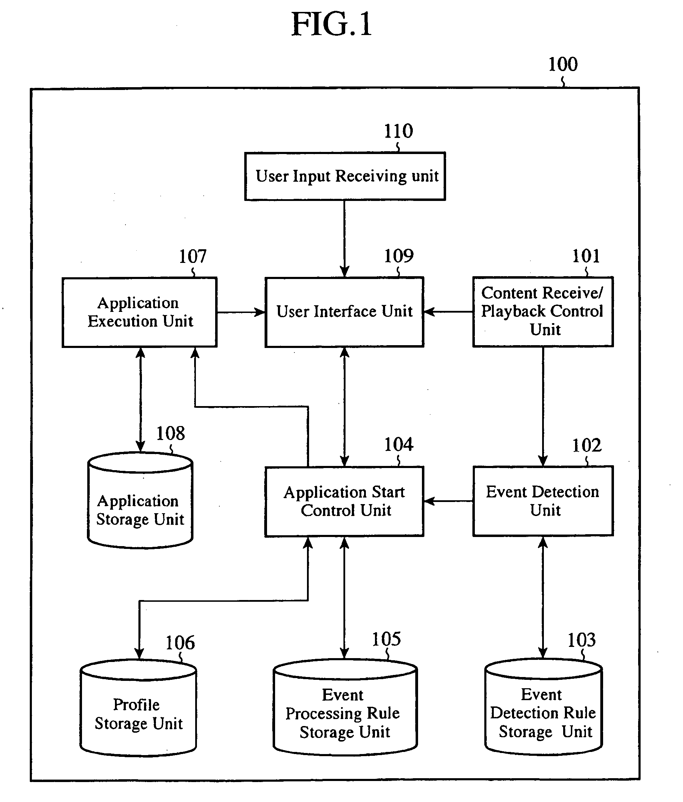

Fig. 1 is a block diagram showing the structure of an application execution terminal in accordance with Embodiment 1 of the present invention. The application execution terminal 100 in accordance with Embodiment 1 has a function of receiving and playing back a content, such as a video or an audio. The application execution terminal 100 also has a function of, according to the description of a content (a video, an audio, or the like) currently being played back or depending on the time period of the current time, suggesting to a user that the application execution terminal should start an application which presents related information about the content to the user.

As shown in Fig. 1, the application execution terminal 100 is provided with a content receive/playback control unit 101, an event detection unit 102, an event detection rule storage unit 103, an application start control unit 104, an event processing rule storage unit 105, a profile storage unit 106, an application execution unit 107, an application storage unit 108, a user interface unit 109, and a user input receiving unit 110. The above-mentioned function is implemented by these components.

The content receive/playback control unit (a content processing unit) 101 receives coded content data via either a broadcast wave or a communications network, and decodes the coded content data. As a result, the content data are decoded to have a data format which can be displayed by the user interface unit 109. The decoded content data are then outputted from the content receive/playback control unit 101 to the user interface unit 109.

The content receive/playback control unit 101 extracts metadata which are multiplexed into the received content data, and outputs the metadata to the event detection unit 102. The metadata are data in which the title and genre of the content, the provider of the content, performer information, content creator information, another explanation of the content, and so on are described.

The event detection unit 102 refers to event detection rules so as to detect occurrence of an event on the basis of information including the description of the metadata inputted from the content receive/playback control unit 101 or the current time. In this invention, an event is information which triggers the application execution terminal to make a suggestion to start an application, and is set up beforehand while being associated with the description of metadata about a content or a time period. An event detected is outputted from the event detection unit 102 to the application start control unit 104.

The event detection rule storage unit 103 stores the event detection rules which govern detection of an event, and the event detection rules are read by the event detection unit 102. The event detection rules are data in which various events are registered while each of them is associated with the description of metadata which can be multiplexed into content data (e.g., a keyword included in the metadata or the genre of the content) or a time period.

The application start control unit 104 checks the status of creation of a profile corresponding to the event detected by the event detection unit 102 according to event processing rules, and then makes a request of the application execution unit 108 to start an application registered in the profile.

The event processing rule storage unit 105 stores the event processing rules, and the event processing rules are read by the application start control unit 104. The event processing rules are data in which an event processing conditions, the description of an event processing operation, the description of a user response, and so on are registered for each of the various events which are registered into the event detection rules while they are associated with each of the events.

The profile storage unit 106 stores a profile corresponding to each of the various events. In this profile, an application which presents information related to the corresponding event and setting information about this application are registered.

The application execution unit 107 executes an application which the application execution unit has been requested to start by the application start control unit 104. The application storage unit 108 stores an application associated with each of the various events, and the application can be read by the application execution unit 107.

The user interface unit 109 presents the user with the content data which have been played back (decoded) and the executed result of the application which are respectively inputted from the content receive/playback control unit 101 and the application execution unit 107 via a not-shown display device and a not-shown audio output device. The user input receiving unit 110 inputs information from outside the terminal according to the user's input operation on a not-shown input operation unit (e.g., a remote controller, a key button, or a touch panel), and outputs the input information to the user interface unit 109.

The content receive/playback control unit 101, the event detection unit 102, the event detection rule storage unit 103, the application start control unit 104, the event processing rule storage unit 105, the profile storage unit 106, the application execution unit 107, the application storage unit 108, the user interface unit 109, and the user input receiving unit 110 can be implemented as a concrete means including software and hardware which work in cooperation with each other on a computer having either a receiving function of receiving a broadcast wave or a communications function of carrying out communications via a communications network, by loading, for example, an application execution program which complies with the purpose of the present invention into the computer and by controlling the operation of the computer.

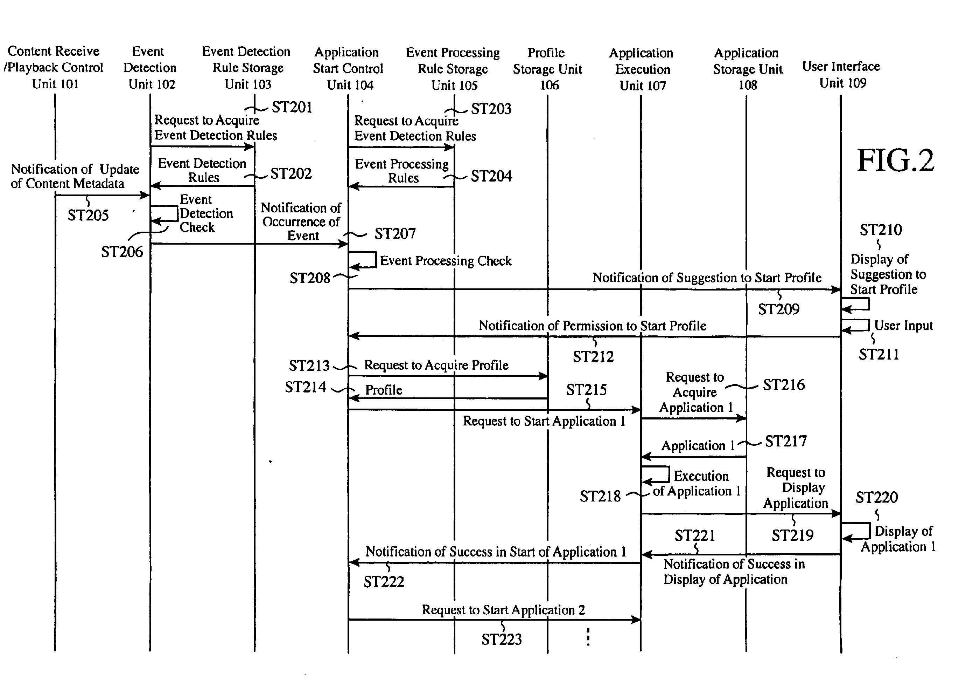

Next, the operation of the application execution terminal will be explained. Fig. 2 is a sequence diagram showing the operation of the application execution terminal shown in Fig. 1. The details of the operation of the application execution terminal 100 will be explained with reference to this figure. First, the event detection unit 102 transmits an event detection rule acquisition request to acquire the event detection rules to the event detection rule storage unit 103 (step ST201). The event detection rule storage unit 103 transmits the event detection rules which the event detection rule storage unit stores therein to the event detection unit 102 in response to the event detection rule acquisition request (step ST202).

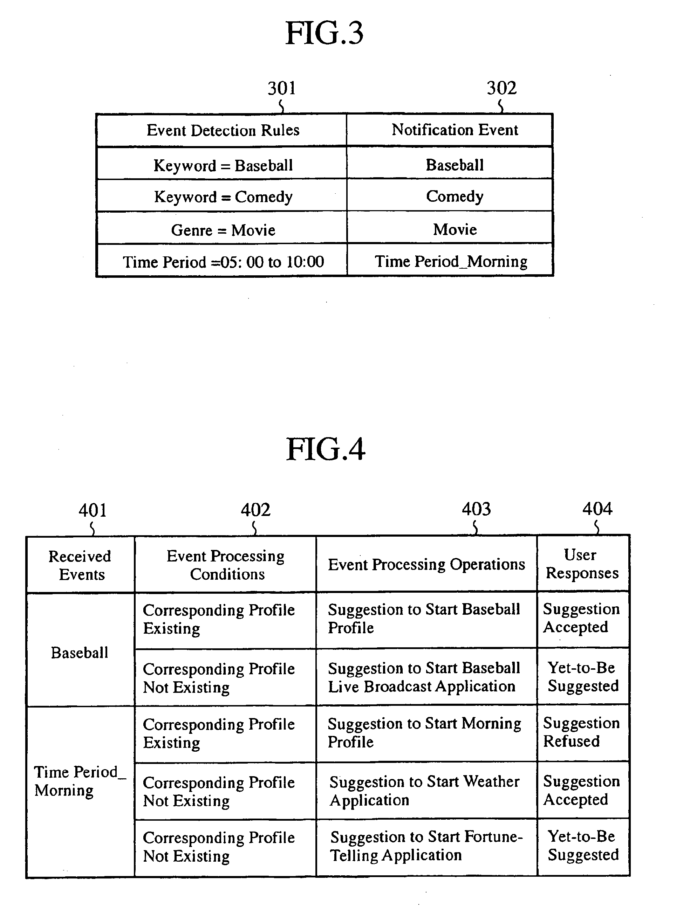

Fig. 3 is a diagram showing an example of the event detection rules. The event detection rule storage unit 103 stores the event detection rules as shown in Fig. 3 therein, and transmits the event detection rules to the event detection unit 102 in response to the event detection rule acquisition request. In each of the event detection rules shown in Fig. 3, settings about event detection are stored while being grouped into a setting in an event detection rule column 301 and a setting in a notified event column 302.

In the event detection rule column 301, an event detection condition for detecting occurrence of an event is set up for each event. As an event detection condition, a keyword related to a corresponding event, the genre of the content, or a time period can be provided. By comparing each rule data in this event detection rule column 301 with either the metadata acquired from the content by the content receive/playback control unit 101 or the current time information, whether an event has occurred is detected.

In the notification event column 302, events each of which is to be detected are set up. In the example of Fig. 3, when the keyword included in the metadata is baseball, an event "baseball" is detected. When an event which matches up with one of the event detection rules 301 is detected, an event occurrence notification indicating occurrence of the event is transmitted from the event detection unit 102 to the application start control unit 104.

Referring to Fig. 2 again, the application start control unit 104 transmits an event processing rule acquisition request to acquire event processing rules to the event processing rule storage unit 105, like the event detection unit 102 (step ST203). The event processing rule storage unit 105 transmits the event processing rules which the event processing rule storage unit stores therein to the application start control unit 104 in response to the event processing rule acquisition request (step ST204).

Fig. 4 is a diagram showing an example of the event processing rules. The event processing rule storage unit 105 stores the event processing rules as shown in Fig. 4 therein, and transmits the event processing rules to the application start control unit 104 in response to the event processing rule acquisition request. In each of the event processing rules shown in Fig. 4, settings about the event processing are stored while being grouped into a setting in a received event column 401, a setting in an event processing condition column 402, a setting in an event processing operation column 403, and a setting in a user response column 404.

In the received event column 401, data indicating the description of each event are set up. In Fig. 4, for example, "baseball" and "time period_morning" which are the descriptions of events are set up in the received event column 401. An event which is to be processed is specified by comparing each event data in this received event column 401 with the event specified by the event occurrence notification received from the event detection unit 102.

In the event processing condition column 402, event processing conditions each for determining a processing operation which is to be performed for a corresponding event detected are set up. As each of the event processing conditions, the presence or absence of a profile corresponding to the event which is specified through the comparison with the event data in the received event column 401 can be provided as shown in Fig. 4. In a profile, various settings for an application, data, and so on which are provided for each user and which correspond to an event are set up.

In the event processing operation column 403, pieces of information each indicating the description of a suggestion (an event processing operation) which is to be made when a corresponding event processing condition in the event processing condition column 402 is satisfied are set up. For example, in a case in which an event "baseball" occurs, if there is a profile (a baseball profile) corresponding to this event "baseball", an operation of suggesting to the user that the application execution terminal should start an application registered into the baseball profile is determined as the event processing operation. In contrast, if there is no baseball profile, the application execution terminal suggests to the user that the application execution terminal should start an application for receiving and playing back a baseball live broadcast.

In the user response column 404, user responses are set up for the processing operations set up in the event processing operation column 403, respectively. In the example of Fig. 4, when the user accepts a suggestion to start an application, "suggestion accepted" is set to a corresponding cell of the user response column 404. In contrast, when the suggestion is refused, "suggestion refused" is set to the corresponding cell of the user response column 404. In contrast to this, when the event processing condition is not satisfied and therefore the corresponding event processing operation is not carried out (when the start of an application is not suggested), "yet-to-be suggested" is set to the corresponding cell of the user response column.

In the above-mentioned way, as the pre-processing which is carried out prior to the processing of the content receive/playback control unit 101, the event detection unit 102 acquires the event detection rules and the application start control unit 104 acquires the event processing rules.

The content receive/playback control unit 101 receives content data via either a broadcast wave or a communications network and playbacks the content data, and also detects whether or not metadata which are multiplexed into the content data have been updated. The detection of whether or not the metadata have been updated can be implemented by, for example, creating and referring to hysteresis information in which the description of the metadata at a specific time is described.

When detecting that the metadata about the content have been updated, the content receive/playback control unit 101 then transmits the updated metadata and a content metadata update notification indicating that the metadata have been updated to the event detection unit 102 (step ST205). It is assumed that the metadata include the title and genre of the content (such as a video or an audio), the provider of the content, performer information, content creator information, and another explanation of the content.

When receiving the content metadata update notification and the updated metadata corresponding to this notification from the content receive/playback control unit 101, the event detection unit 102 compares the description of this metadata with the event detection rules so as to judge whether an event which has to be detected has occurred because of the updating of the metadata (step ST206). Explaining this process using the example shown in Fig. 3, when an arbitrary part of the metadata associated with the specific content has a keyword "baseball", an event "baseball" is detected. In contrast, when information indicating that the genre of the content is "movie" is described in the metadata, an event "movie" is detected.

The event detection unit 102 also acquires the current time from a not-shown timer, and compares the current time with the event detection rules so as to judge whether an event corresponding to the current time has occurred. In the example of Fig. 3, when the current time is 7:00, because this current time matches up with an event detection rule "time period == 05:00 to 10:00", an event "time period_morning" is detected.

When detecting occurrence of an event, the event detection unit 102 transmits an event occurrence notification indicating the detected event to the application start control unit 104 (step ST207). The application start control unit 104 compares the event indicated by the event occurrence notification received from the event detection unit 102 with the event processing rules so as to determine event processing corresponding to the detected event (step ST208).

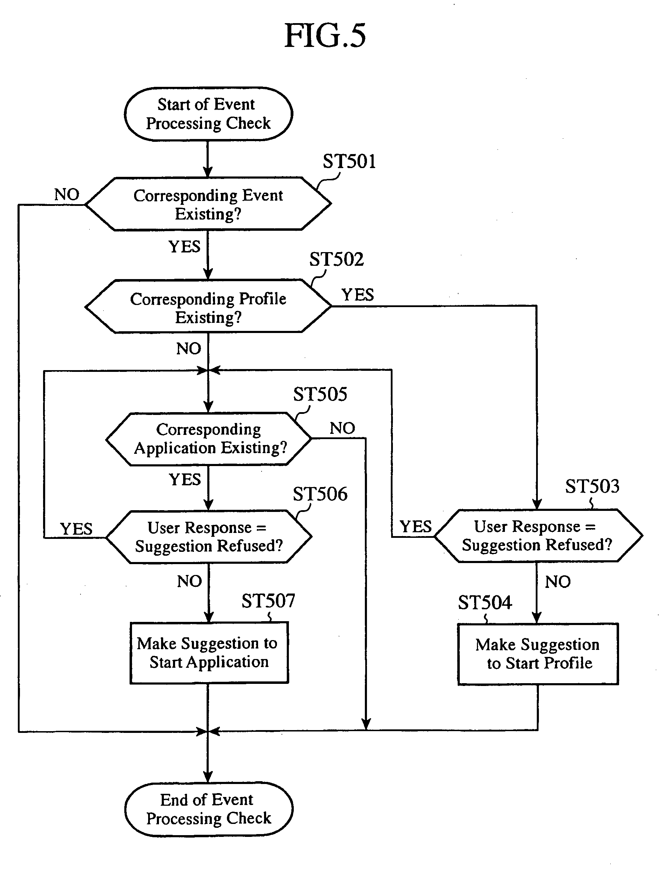

Fig. 5 is a flow chart showing a flow of an event processing check which is carried out by the application start control unit shown in Fig. 1. The operation of checking event processing will be explained in detail with reference to this figure. First, the application start control unit 104 checks to see whether or not the event indicated by the event occurrence notification received from the event detection unit 102 is defined in the received event column 401 of the event processing rules shown in Fig. 4 (step ST501). In this case, if the event indicated by the event occurrence notification is not defined in the received event column 401, the application start control unit ends the event processing check.

In contrast, when the event indicated by the event occurrence notification is defined in the received event column 401, the application start control unit 104 inquires of the profile storage unit 106 whether there exists a profile corresponding to this event (step ST502).

When the profile corresponding to the event indicated by the event occurrence notification exists in the profile storage unit 106, the application start control unit 104 refers to the user response column 404 of the event processing rules, and then judges whether, as a result of performing the event processing corresponding to this event, "suggestion refused" has been made by the user (step ST503). As a result, the application start control unit can prevent the suggestion which has been refused once by the user from being carried out repeatedly.

When, in step ST503, judging that "suggestion refused" is not set up in the user response column 404, the application start control unit 104 determines to make a suggestion to start the profile corresponding to this event (step ST504). In contrast, when judging that "suggestion refused" is set up in the user response column 404, the application start control unit 104 shifts to a process of step ST505 after setting up "corresponding profile not existing" in the cell corresponding to this event in the event processing condition column 402.

Thus, even if the start of the application of the profile is refused, the application start control unit 104 shifts to the process of step ST505 of judging the presence or absence of an application corresponding to this event. As a result, the application execution terminal can suggest to the user that the application execution terminal should start an application which is not registered into any profile among applications corresponding to this event.

The application start control unit 104, in step ST505, refers to the event processing rule about the event indicated by the event occurrence notification, and searches for an event processing rule in which "corresponding profile not existing" is set up in the corresponding cell of the event processing condition column 402 and information indicating an operation of suggesting a start of an application is set up in the corresponding cell of the event processing operation column 403 (step ST505).

At this time, if "corresponding profile not existing" is set up in the corresponding cell of the event processing condition column 402 and no information indicating an operation of suggesting a start of an application is set up in the corresponding cell of the event processing operation column 403, the application start control unit 104 ends the event processing check.

In contrast, if "corresponding profile not existing" is set up in the corresponding cell of the event processing condition column 402 and the information indicating an operation of suggesting a start of an application is set up in the corresponding cell of the event processing operation column 403, the application start control unit 104 refers to the cell corresponding to this event of the user response column 404 so as to judge whether or not "suggestion refused" is set up (step ST506). When, in step ST506, judging that "suggestion refused" is set up in the corresponding cell of the user response column 404, the application start control unit 104 returns to step ST505 in which the application start control unit carries out a process of judging whether or not information indicating a suggestion to start another application is set up.

In contrast, when, in step ST506, judging that "suggestion refused" is not set up in the corresponding cell of the user response column 404, the application start control unit 104 determines to notify a suggestion to start an application for which "suggestion refused" is not set up to the user interface unit 109 (step ST507).

When the application start control unit 104 determines either a profile or an application, which the application start control unit has to make a notification of a suggestion to start, through the event processing check in above-mentioned step ST208, the application start control unit 104 transmits a notification of a suggestion to start either the above-mentioned profile or the above-mentioned application to the user interface unit 109. The example of Fig. 2 shows a case in which the application start control unit 104, in step ST208, determines a profile which the application start control unit has to make a notification of a suggestion to start. As a result, the notification indicating the suggestion to start the profile is transmitted from the application start control unit 104 to the user interface unit 109 (step ST209).

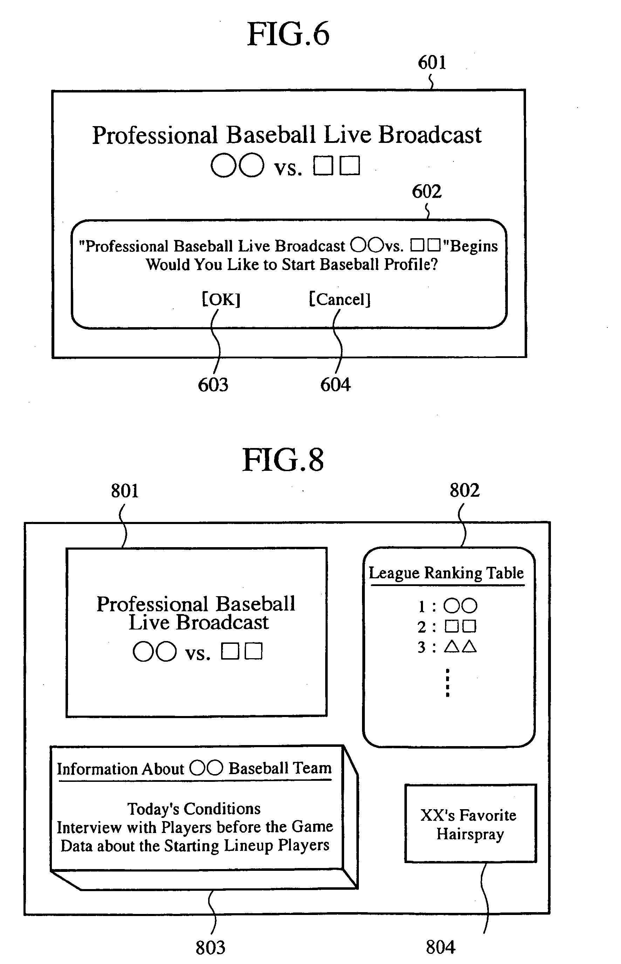

When receiving the notification indicating the suggestion to start the profile (or an application) from the application start control unit 104, the user interface unit 109 displays the suggestion to start the profile (or the application) on a not-shown display device (step ST210). Fig. 6 is a diagram showing an example of display of the suggestion to start the profile by the user interface unit shown in Fig. 1. A subsequent process shown in Fig. 2 will be explained with reference to this Fig. 6. In the example of Fig. 6, the application execution terminal suggests whether to start a baseball profile when triggered by a start of a program "professional baseball live broadcast ○○ vs. □□", and superimposes a suggestion 602 to start the baseball profile on the screen 601 on which the application execution terminal displays the video content of the professional baseball live broadcast program.

An OK button 603 and a Cancel button 604 each of which enables the user to make an on setting via the user input receiving unit 110 by using a not-shown input device, such as a remote controller, are disposed in the suggestion 602 to start the baseball profile. In a case in which "Would you like to start the baseball profile" is provided in the suggestion 602 to start the baseball profile, the user is allowed to turn on the OK button 603 in order to permit the start of the baseball profile. In contrast, the user is allowed to turn on the Cancel button 604 in order to refuse the start of the baseball profile.

The user can select either the OK button 603 or the Cancel button 604 via the user input receiving unit 110 by performing an input operation on the not-shown input device so as to determine whether to start the baseball profile (step ST211). At this time, when the user turns on the Cancel button 604 so as to refuse the start of the profile, the user interface unit 109 ends the display of the suggestion 602 to start the baseball profile, but continues the display of the video content. The user interface unit 109 also transmits a notification indicating the refusal to start the profile to the application start control unit 104. When receiving this notification, the application start control unit 104 sets up "suggestion refused" in the corresponding cell of the user response column 404 of the event processing rules acquired from the event processing rule storage unit 105.

In contrast, when the user, in step ST211, turns on the OK button 603 so as to accept the start of the profile, the user interface unit 109 transmits a notification indicating permission to start the profile to the application start control unit 104 (step ST212).

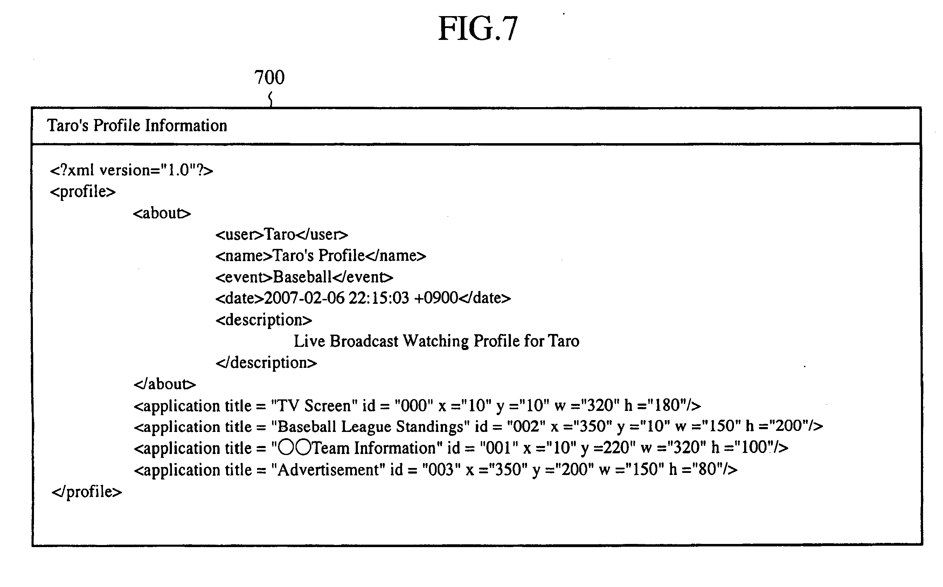

When receiving the notification indicating permission to start the profile, the application start control unit 104 transmits a profile acquisition request to acquire the profile associated with the event detected by the event detection unit 102 (i.e., the event indicated by the event occurrence notification) to the profile storage unit 106 (stepST213). Fig. 7 is a diagram showing an example of the profile information stored in the profile storage unit shown in Fig. 1. The example of Fig. 7 shows the profile information 700 associated with the event "baseball" of "Taro" who is the user, and the profile information is described in XML (extensible Markup Language).

Pieces of setting information, such as the titles and the IDs of a plurality of applications registered into the profile of "Taro", the positions where the plurality of applications are to be arranged on the screen, and the display sizes of the plurality of applications, are described in the profile information 700. For example, in a case of an application whose title is "TV Screen", its ID is "000", the position where the application is to be arranged on the screen is x="10" and y="10", and its display size is w="320" and h="180".

When the application start control unit 104 acquires the profile information 700 according to the profile acquisition request from the profile storage unit 106 (step ST214), the application start control unit analyzes the description of this profile information 700 so as to extract setting information about the settings of a plurality of applications registered into this profile. After that, the application start control unit 104 transmits, as well as the extracted setting information about the settings of the plurality of applications, a request to start each of these applications to the application execution unit 107 (step ST215).

The example of Fig. 2 shows a case in which an application 1 is started first among the plurality of applications registered into the profile information 700. After that, the processes corresponding to steps ST215 to ST222 which will be mentioned later are repeatedly performed until the starts of all the applications including an application 2, an application 3, and ... included in the profile information 700 are completed.

When receiving the request to start the application 1, the application execution unit 107 transmits an application acquisition request to acquire the application 1 specified by this start request to the application storage unit 108 (step ST216) . The application storage unit 108 reads the application 1 corresponding to the application acquisition request, and transmits the application 1 to the application execution unit 107 (step ST217).

When receiving the application 1 from the application storage unit 108, the application execution unit 107 executes the application 1 according to a predetermined procedure (step ST218). Next, the application execution unit 107 transmits a request to display the application 1 to the user interface unit 109 in order to display the executed results of the application 1 on the not-shown screen via the user interface unit 109 (step ST219).

The user interface unit 109 displays the executed results of the application 1 specified by the display request on the not-shown screen (step ST220). After succeeding in the display of the executed results of the application 1, the user the interface unit 109 transmit a notification indicating the success in the display of the application to the application execution unit 107 (step ST221). Next, the application execution unit 107 transmits a notification indicating the success in the start of the application 1 to the application start control unit 104 (step ST222).

When receiving the notification indicating the success in the start of the application 1, the application start control unit 104 then makes a request of the application execution unit 107 to start the next application 2 registered into the profile information 700 (step ST223). The processes corresponding to steps ST215 to ST222 are repeatedly performed until the starts of all the applications included in the profile information 700 are completed. Thus, the application execution terminal 100 performs the start of either an application which presents the information related to the content or an application registered into the profile on the basis of the event detected by the event detection unit 102.

Fig. 8 is a diagram showing an example of the display of the executed results of applications by the user interface unit in Fig. 1, and shows a state in which the display of a plurality of applications registered into the profile information 700 shown in Fig. 7 is completed. In the example of Fig. 8, a video content screen 801, a baseball league ranking table 802, information 803 about the ○○ baseball team which is a baseball team, and advertisement 804 are displayed on the screen of the display device.

The video content screen 801 shows the results of execution of a display application (having a title "TV Screen") for displaying a video content among the plurality of applications registered into the profile information 700 shown in Fig. 7. The league ranking table 802 shows the result of execution of an application (having a title "Baseball League Standings") for presenting a league ranking table. The information 803 about the ○○ baseball team shows the results of execution of an application (having a title "○○ Baseball Team Information") for presenting the information about the ○ ○ baseball team. The advertisement 804 shows the results of execution of an application (having a title "Advertisement") for displaying an advertisement.

The user can manipulate the executed results of any application via the user input receiving unit 110 by performing an input operation on the not-shown input device. For example, by selecting the information 803 about the ○○ baseball team and making the application execution terminal transmit a request to execute an application which presents more detailed information about the ○○ baseball team to the application execution unit 107, the user enables the application execution terminal to execute the application to display the more detailed information on the screen.

As mentioned above, the application execution terminal in accordance with this Embodiment 1 includes: the event detection unit 102 for, on the basis of the event detection rules in which event detection conditions are described for various events, respectively, detecting an event which matches up with one of the event detection conditions when the content receive/playback control unit 101 receives and playbacks a content; the profile storage unit 106 for storing profiles in each of which an application associated with an event is registered; the event processing rule storage unit 105 for storing the event processing rules in which the description of a suggestion which is to be made in response to occurrence of an event is described; the application execution unit 107 for starting and executing an application in response to a start request; and the application start control unit 104 for suggesting a start of either an application or a profile which is associated with the event detected by the event detection unit 102 on the basis of the event processing rules, and for making a request of the application execution unit 107 to start either the application for which the starting suggestion is accepted or an application registered into the profile for which the starting suggestion is accepted. Because the application execution terminal has such the structure, the application execution terminal can make a suggestion to start a plurality of applications which are registered into a profile in advance and to start a single application to the user in response to an event which is detected according to the received metadata of the content or depending upon a time period. As a result, when the user watches the content, the application execution terminal can easily start an application which is appropriate for the description of the content or the watching time period.

Furthermore, in accordance with this Embodiment 1, because the application start control unit 104 modifies the event processing rules in such a way that, when a suggestion to start either an application or a profile has been refused once, even if an event associated with this suggestion occurs, the application start control unit does not make any suggestion to start either the application or the profile. Therefore, the application start control unit does not make any suggestion to start either an application or a profile which the user has refused to accept a suggestion to start even if an event associated with this suggestion occurs. Thereby, the user is not bothered by judgment of whether to refuse or accept a suggestion to start an application which he or she does not desire, and therefore can accept a suggestion to start only an application which the user desires according to the detected event.

### Embodiment 2.

An application execution terminal in accordance with this Embodiment 2 manages the number of times that a suggestion to start either an application or a profile has been accepted, and makes a suggestion to register the application into a profile or to automatically start the profile according to the number of times that a suggestion to start either the application or the profile has been accepted.

While the fundamental structure of the application execution terminal in accordance with Embodiment 2 is the same as the structure of that in accordance with above-mentioned Embodiment 1 shown in Fig. 1, the application start control unit in accordance with Embodiment 2 differ from that in accordance with above-mentioned Embodiment 1 in that the application start control unit in accordance with Embodiment 2 manages the number of times that a suggestion to start either an application or a profile has been accepted, and makes a suggestion to automatically start the profile according to the number of times that a suggestion to start either the application or the profile has been accepted. Hereinafter, the operation of the application execution terminal in accordance with Embodiment 2 will be explained by applying the structure of Fig. 1 to the application execution terminal in accordance with this Embodiment 2.

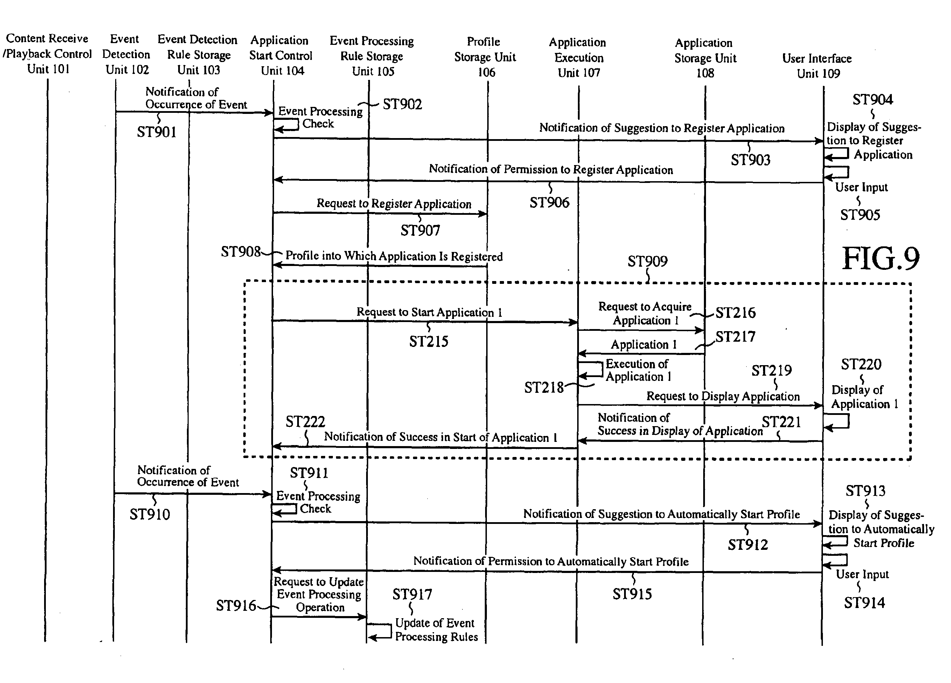

Next, the operation of the application execution terminal will be explained. Fig. 9 is a sequence diagram showing the operation of the application execution terminal in accordance with Embodiment 2 of the present invention. The details of the operation of the application execution terminal 100 in accordance with Embodiment 2 will be explained with reference to this diagram. First, the event detection unit 102 transmits a request to acquire event detection rules to the event detection rule storage unit 103, like that of above-mentioned Embodiment 1. The event detection rule storage unit 103 transmits the event detection rules which the event detection rule storage unit itself stores therein to the event detection unit 102 in response to the event detection rule acquisition request.

The application start control unit 104 transmits a request to acquire event processing rules to the event processing rule storage unit 105, like the event detection unit 102. The event processing rule storage unit 105 transmits the event processing rules which the event processing rule storage unit itself stores therein to the application start control unit 104 in response to the event processing rule acquisition request.

The content receive/playback control unit 101 receives content data via either a broadcast wave or a communications network and playbacks the content data, and also detects whether or not metadata which are multiplexed into the content data have been updated. When detecting that the metadata about the content have been updated, the content receive/playback control unit 101 transmits the updated metadata and a content metadata update notification indicating that the metadata have been updated to the event detection unit 102.

When receiving the content metadata update notification and the updated metadata corresponding to this notification from the content receive/playback control unit 101, the event detection unit 102 compares the description of this metadata with the event detection rules so as to judge whether an event which has to be detected has occurred because of the updating of the metadata. The event detection unit 102 also acquires the current time from a not-shown timer, and compares the current time with the event detection rules so as to judge whether an event corresponding to the current time has occurred.

When detecting occurrence of an event by doing in the above-mentioned way, the event detection unit 102 transmits an even occurrence notification indicating the detected event to the application start control unit 104 (step ST901). The application start control unit 104 compares the event indicated by the event occurrence notification received from the event detection unit 102 with the event processing rules so as to determine event processing corresponding to the detected event (step ST902).

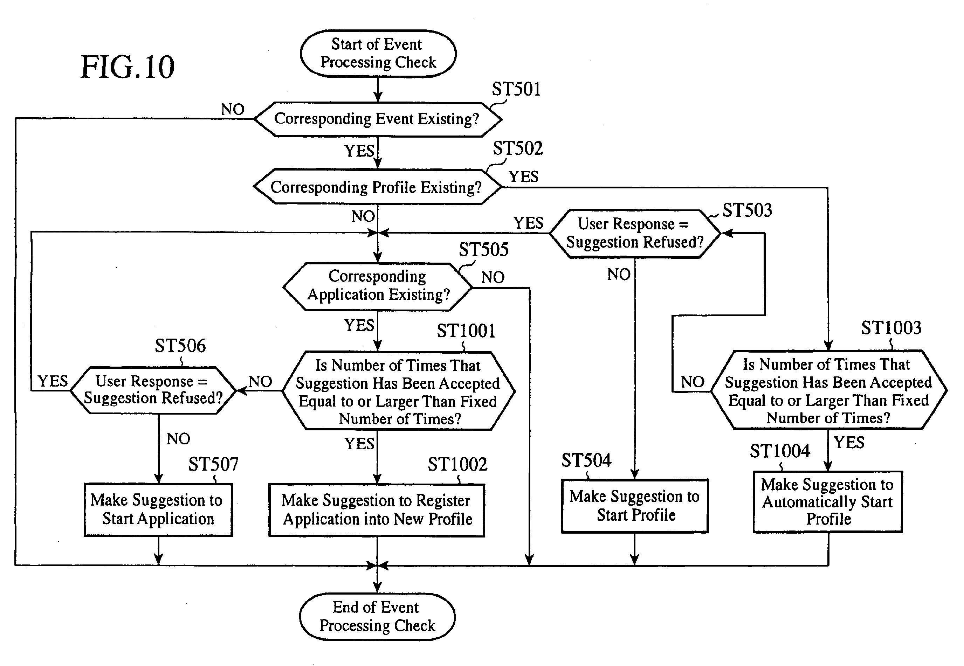

Fig. 10 is a flow chart showing a flow of an event processing check which is carried out by the application start control unit in accordance with Embodiment 2. The event processing checking operation will be explained in detail with reference to this figure. First, the application start control unit 104 in accordance with Embodiment 2 checks to see whether or not the event indicated by the event occurrence notification received from the event detection unit 102 is defined in the event processing rules (step ST501), like that in accordance with above-mentioned Embodiment 1.

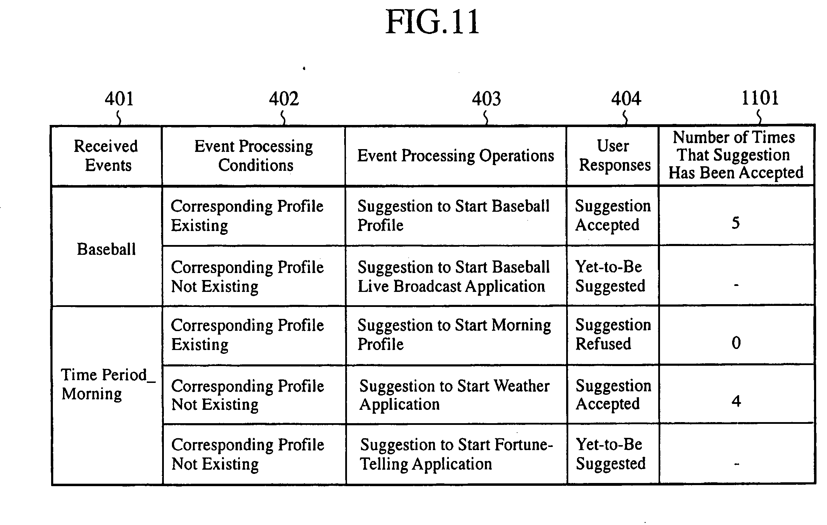

Fig. 11 is a diagram showing an example of the event processing rules in accordance with Embodiment 2. As shown in Fig. 11, in each of the event processing rules, settings about the event processing are stored while being grouped into a setting in a received event column 401, a setting in an event processing condition column 402, a setting in an event processing operation column 403, a setting in a user response column 404, and a setting in a suggestion-acceptance number-of-times column 1101. The setting columns 401 to 404 are the same as those of Fig. 4 explained in above-mentioned Embodiment 1. Each data in the suggestion-acceptance number-of-times column 1101 show the number of times that a suggestion is accepted by the user when a suggested process in a corresponding cell of the event processing operation column 403 is carried out.

The application start control unit 104, in step ST501, checks to see whether or not the event indicated by the event occurrence notification received from the event detection unit 102 is defined in the received event column 401 of the event processing rules shown in Fig. 11. If the event indicated by the event occurrence notification is not defined in the received event column 401, the application start control unit 104 ends the event processing check. In contrast, when the event indicated by the event occurrence notification is defined in the received event column 401, the application start control unit 104 inquires of the profile storage unit 106 whether a profile corresponding to this event exists (step ST502).

When the event indicated by the event occurrence notification does not exist in the profile storage unit 106, the application start control unit 104 refers to the event processing rules about this event so as to search for a event processing rule in which "corresponding profile not existing" is set up in the corresponding cell of the event processing condition column 402 and information indicating an operation of suggesting a start of an application is set up in the corresponding cell of the event processing operation column 403 (step ST505). At this time, if "corresponding profile not existing" is set up in the corresponding cell of the event processing condition column 402 and no information indicating an operation of suggesting a start of an application is set up in the corresponding cell of the event processing operation column 403, the application start control unit 104 ends the event processing check.

In contrast, when "corresponding profile not existing" is set up in the corresponding cell of the event processing condition column 402 and the information indicating an operation of suggesting a start of an application is set up in the corresponding cell of the event processing operation column 403, the application start control unit 104 refers to the cell corresponding to this event of the suggestion-acceptance number-of-times column 1101, and judges whether or not the number of times that "suggestion acceptance" has been done by the user is equal to or larger than a fixed number of times as a result of making a suggestion to start an application which is defined in the corresponding cell of the above-mentioned event processing operation column 403 (step ST1001).

At this time, when the number of times in the cell of the suggestion-acceptance number-of-times column 1101 is equal to or larger than the fixed number of times, the application start control unit 104 determines to make a suggestion to register the application set up in the corresponding cell of the above-mentioned event processing operation column 403 into a new profile (step ST1002). After that, the application start control unit 104 ends the event processing check.

When, in step ST1001, the number of times in the cell of the suggestion-acceptance number-of-times column 1101 is smaller than the fixed number of times, the application start control unit 104 refers to the cell corresponding to this event of the user response column 404 so as to judge whether or not "suggestion refused" is set up in the cell (step ST506). At this time, if "suggestion refused" is set up in the cell of the user response column 404, the application start control unit 104 returns to step ST505 in which the application start control unit carries out a process of judging whether or not information indicating a suggestion to start another application is set up.

If, in step ST506, "suggestion refused" is not set up in the cell of the user response column 404, the application start control unit 104 determines to notify a suggestion to start an application for which "suggestion refused" is not set up to the user interface unit 109 (step ST507). After that, the application start control unit 104 ends the event processing check.

When, in step ST502, the event indicated by the event occurrence notification exists in the profile storage unit 106, the application start control unit 104 refers to the corresponding cell of the suggestion-acceptance number-of-times column 1101 of the event processing rules so as to judge whether or not the number of times that "suggestion acceptance" has been done by the user is equal to or larger than a fixed number of times as a result of performing event processing (making a starting suggestion) of the profile corresponding to this event (step ST1003).

When the number of times in the cell of the suggestion-acceptance number-of-times column 1101 is equal to or larger than the fixed number of times, the application start control unit 104 determines to make a suggestion to automatically start a profile corresponding to this event (step ST1004). After that, the application start control unit 104 ends the event processing check.

In contrast, when the number of times in the cell of the suggestion-acceptance number-of-times column 1101 is smaller than the fixed number of times, the application start control unit 104 refers to the corresponding cell of the user response column 404 of the event processing rules so as to judge whether "suggestion refused" has been made by the user as a result of performing the event processing corresponding to this event (step ST503).

If, in step ST503, "suggestion refused" is not set up in the cell of the user response column 404, the application start control unit 104 determines to make a suggestion to start a profile corresponding to this event (step ST504). After that, the application start control unit 104 ends the event processing check.

In contrast, when "suggestion refused" is set up in the cell of the user response column 404, the application start control unit 104 shifts to the process of step ST505 after setting "corresponding profile not existing" to the cell corresponding to this event of the event processing condition column 402.

Referring now to Fig. 9 again, when the application start control unit 104, in step ST1002 shown in Fig. 10, determines to make a suggestion to register the application to a new profile, the application start control unit 104 transmits a notification indicating this suggestion to register the application to the user interface unit 109 (step ST903). When receiving the notification indicating the suggestion to register the application from the application start control unit 104, the user interface unit 109 displays this suggestion to register the application on a not-shown display device (step ST904).

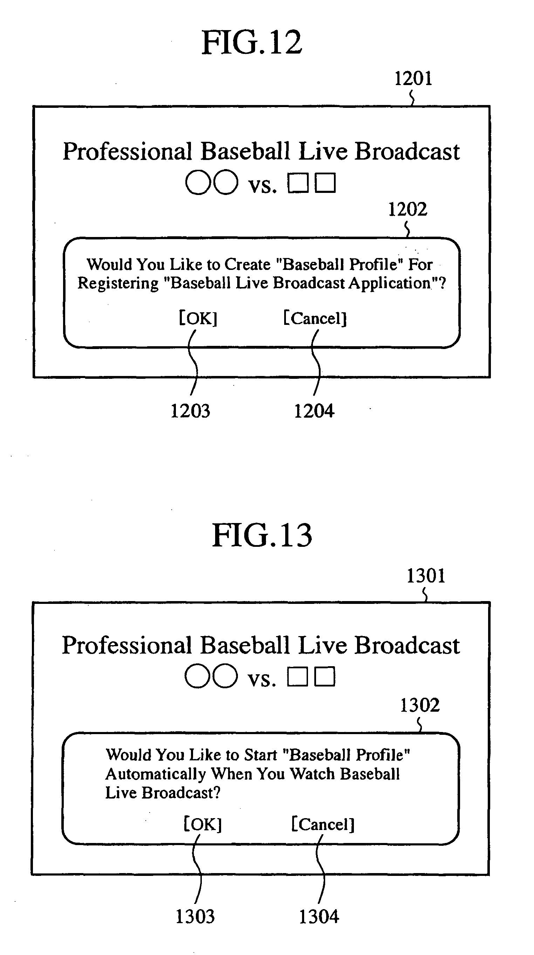

Fig. 12 is a diagram showing an example of display of a suggestion to register an application by the user interface unit of Embodiment 2. The example of Fig. 12 shows a suggestion to create a "baseball profile" into which a "baseball live broadcast application" for displaying a professional baseball live broadcast on the display device to present this live broadcast to the user is registered. In this example, a suggestion 1202 to register the baseball live broadcast application into the "baseball profile" is displayed on a screen 1201 on which the video content of the professional baseball live broadcast is displayed while being superimposed on the video content.

An OK button 1203 and a Cancel button 1204 each of which enables the user to make an on setting via the user input receiving unit 110 by using a not-shown input device, such as a remote controller, are disposed in the suggestion 1202 to register the baseball live broadcast application. In a case in which "Would you like to create a baseball profile?" is provided in the suggestion 1202 to register the baseball live broadcast application, the user is allowed to turn on the OK button 1203 in order to permit the creation of a baseball profile. In contrast, the user is allowed to turn on the Cancel button 1204 in order to refuse the creation of a baseball profile.

The user selects either the OK button 1203 or the Cancel button 1204 via the user input receiver 110 by performing an input operation on the not-shown input device so as to determine whether to create a baseball profile into which the baseball live broadcast application is registered (step ST905). When the user turns on the Cancel button 1204 to refuse the creation of a baseball profile, the user interface unit 109 ends the display of the suggestion 1202 to register the baseball live broadcast application and then continues the display of the video content. The user interface unit 109 also transmits a notification indicating that the start of the baseball profile has been refused to the application start control unit 104. When receiving this notification, the application start control unit 104 sets "suggestion refused" to the corresponding cell of the user response column 404 of the event processing rules acquired from the event processing rule storage unit 105.

When the user, in step ST905, turns on the OK button 1203 to accept the creation of a baseball profile into which the baseball live broadcast application is registered, the user interface unit 109 transmits a notification indicating permission to register the baseball live broadcast application to the application start control unit 104 (step ST906). When the OK button 1203 is selected by the user, the user interface unit 109 can display a screen for specifying the position of the application on the user interface (on the screen) so as to urge the user input the position of the application.

When receiving the notification indicating permission to register the baseball live broadcast application, the application start control unit 104 creates a baseball profile into which the baseball live broadcast application specified by the notification of the registration permission is registered, and makes a request of the profile storage unit 106 to register the baseball live broadcast application while specifying the baseball profile as a profile into which the baseball live broadcast application is registered (step ST907).

The profile storage unit 106 registers the application which it has been requested to register by the application start control unit 104 into the specified profile, and transmits profile information about the profile into which the application has been newly registered to the application start control unit 104 (step ST908). The application start control unit 104 then performs a process of starting the application according to the profile information acquired from the profile storage unit 106 (step ST909) in the same way that the processes of steps ST215 to ST221 shown in Fig. 2 are carried out.

Next, when the event detection unit 102 detects another event on the basis of either the metadata about a video content which the application execution terminal 100 receives or a time period, like that of above-mentioned Embodiment 1, the event detection unit 102 transmits an event occurrence notification indicating the detected event to the application start control unit 104 (step ST910).

The application start control unit 104 then carries out an event processing check shown in Fig. 10 (step ST911). Hereafter, a case in which the application start control unit 104, in step ST1004 of Fig. 10, determines to make a suggestion to automatically start a profile corresponding to the event specified by the event occurrence notification will be explained as an example. In this case, the application start control unit 104 transmits a notification indicating the above-mentioned suggestion to automatically start the corresponding profile to the user interface unit 109 (step ST912).

When receiving the notification indicating the suggestion to automatically start the corresponding profile from the application start control unit 104, the user interface unit 109 displays this suggestion to automatically start the corresponding profile on the not-shown display device (step ST913). Fig. 13 is a diagram showing an example of display of the suggestion to automatically start the profile. In the example of Fig. 13, the application execution terminal suggests whether to automatically start a baseball profile when triggered by start of a program "professional baseball live broadcast ○○ vs. □□", and superimposes a suggestion 1302 to automatically start the baseball profile on a screen 1301 on which the application execution terminal displays the video content of the professional baseball live broadcast program. Subsequent processes shown in Fig. 9 will be explained with reference to this Fig. 13.

An OK button 1303 and a Cancel button 1304 each of which enables the user to make an on setting via the user input receiving unit 110 by using a not-shown input device, such as a remote controller, are disposed in the suggestion 1302 to automatically start the baseball profile. In a case in which "Would you like to automatically start the baseball profile?" is provided in the suggestion 1302 to automatically start the baseball profile, the user is allowed to turn on the OK button 1303 in order to permit the autostart of the baseball profile. In contrast, the user is allowed to turn on the Cancel button 1304 in order to refuse the autostart of the baseball profile.

The user selects either the OK button 1303 or the Cancel button 1304 via the user input receiver 110 by performing an input operation on the not-shown input device so as to determine whether to automatically start the baseball profile (step ST914). When the user turns on the Cancel button 1304 to refuse the autostart of the baseball profile, the user interface unit 109 ends the display of the suggestion 1302 to automatically start the baseball profile and then continues the display of the video content.

When the user, in step ST914, turns on the OK button 1303 to accept the autostart of the baseball profile, the user interface unit 109 transmits a notification indicating permission to automatically start the baseball profile to the application start control unit 104 (step ST915). When receiving the notification indicating permission to automatically start the baseball profile, the application start control unit 104 sets information indicating an event processing operation of automatically starting the permitted profile (the baseball profile) to the corresponding event's cell (i.e., the cell of the event specified by the event occurrence notification) of the event processing operation column 403 of the event processing rules.

After that, the application start control unit 104 transmits an event processing rule update request to update the event processing rules in such a way that when, after that, the above-mentioned event occurs, the above-mentioned profile (the baseball profile) starts automatically to the event processing rule storage unit 105 (step ST916). When receiving the above-mentioned event processing rule update request, the event processing rule storage unit 105 updates the cell corresponding to this request of the event processing operation column 403 of the event processing rules from "suggestion to start ○○ profile" to "autostart of baseball profile" (step ST917). As a result, when the event occurs, the application execution terminal in accordance with this embodiment performs the autostart of the profile by using the application start control unit 104 without inquiring the user whether to start the profile by using the user interface unit 109.

As mentioned above, in the application execution terminal in accordance with this Embodiment 2, when the number of times that a suggestion to start an application has been made becomes equal to or larger than a predetermined number of times, the application start control unit 104 makes a suggestion to register the application into a profile via the user interface unit 109, and, when the suggestion is accepted, stores the profile into which the application is registered in the profile storage unit 106. Furthermore, when the number of times that a suggestion to start a profile has been made becomes equal to or larger than a predetermined number of times, the application start control unit 104 makes a suggestion to automatically start the profile via the user interface unit 109 when a corresponding event occurs, and, when the suggestion is accepted, modifies the event processing rules in such a way that the profile starts automatically in response to occurrence of the corresponding event.
By doing in this way, the application execution terminal in accordance with this Embodiment 2 can automatically start an application which the user uses frequently while associating the application with an event step by step. As a result, the user can save himself or herself from having to manipulate the application execution terminal 100 every time when he or she is inquired whether to start an application by the application execution terminal 100, and therefore can make the application execution terminal 100 easily start an application which is appropriate for the description of the content or the watching time period.
Many widely different embodiments of the present invention may be constructed without departing from the scope of the present invention. It should be understood that the present invention is not limited to the specific embodiments described in the specification, except as defined in the appended claims.

## Claims

1. An application execution terminal (100) comprising:
a content processing unit (101) configured to receive a content including metadata_multiplexed into the content, extract said metadata and play back the content, and a user interface unit (109) configured to present the content played back to a user,
an event detection unit (102) configured to, on a basis of event detection rules in which event detection conditions are described for various events, respectively, detect an event in the metadata extracted by said content processing unit (101) which matches up with one of said event detection conditions;
an application storage unit (108) configured to store plural applications associated with each of the various events;
a profile storage unit (106) configured to store profiles in each of which an application which presents information related to the corresponding event and setting information about this application are registered;
an event processing rule storage unit (105) configured to store event processing rules in which a description of suggestions which are to be made in response to occurrence of an event, is described including suggestions to start, if a profile associated with the event exists, said profile and suggestions to start, if no profile associated with the event exists, an application, which is associated with the event,
an application execution unit (107) configured to start and execute an application stored in the application storage unit (108) in response to a start request; and
an application start control unit (104) configured, if it determines that a profile exists, which is associated with the event detected by said event detection unit, to make a suggestion to the user to start said profile on a basis of said event processing rules and if it determines that no profile but an application exists, which is associated with the event detected by said event detection unit, to make a suggestion to the user to start said application on a basis of said event processing rules, and configured to transmit a request to said application execution unit to start either said application, if the suggestion to start said application is accepted_by the user, or an application registered into said profile as well as the setting information registered into said profile, if the suggestion to start said profile is accepted by the user,
wherein when a number of times that the suggestion to start an application has been accepted becomes larger than a predetermined number of times, the application start control unit makes a suggestion to register said application into a profile via the user interface unit, and, when said suggestion is accepted, stores the profile into which said application is registered in the profile storage unit..

2. The application execution terminal according to claim 1, **characterized in that** when the suggestion to start either the application or the profile is refused, the application start control unit modifies the event processing rules in such a way that the application start control unit does not make any suggestion to start either the application or the profile in response to occurrence of an event corresponding to either said application or said profile.

3. The application execution terminal according to claim 1, **characterized in that** a number of times that the suggestion to start the profile has been accepted becomes larger than a predetermined number of times, the application start control unit makes a suggestion to automatically start said profile via the user interface unit when a corresponding event occurs, and, when said suggestion is accepted, modifies the event processing rules in such a way that said profile starts automatically in response to occurrence of said corresponding event.

## Patentansprüche

1. Anwendungsausführungsendgerät (100) enthaltend:
eine Inhaltsverarbeitungseinheit (101), die eingerichtet ist, einen Inhalt einschließlich Metadaten, die in den Inhalt gemultiplext sind, zu empfangen, die genannten Metadaten herauszuziehen und den Inhalt wiederzugeben, und eine Nutzerschnittstelleneinheit (109), die eingerichtet ist, den Inhalt, der wiedergegeben wird, einem Nutzer zu präsentieren,
eine Ereigniserfassungseinheit (102), die eingerichtet ist, auf einer Basis von Ereigniserfassungsregeln, in denen für jeweils verschiedene Ereignisse Ereigniserfassungsbedingungen beschrieben sind, ein Ereignis in den Metadaten, die durch die genannte Inhaltsverarbeitungseinheit (101) herausgezogen wurden zu erfassen, das mit einer der genannten Ereigniserfassungsbedingungen zusammen passt;
eine Anwendungsspeichereinheit (108), die eingerichtet ist, eine Vielzahl von Anwendungen, die mit jedem der verschiedenen Ereignisse verknüpft sind, zu speichern;
eine Profilspeichereinheit (106), die eingerichtet ist, Profile zu speichern, in deren jedem eine Anwendung, die Information bezüglich des entsprechenden Ereignisses darstellt, und Einstellungsinformationen über diese Anwendung registriert sind;
eine Ereignisverarbeitungsregelspeichereinheit (105), die eingerichtet ist, Ereignisverarbeitungsregein zu speichern, in denen eine Beschreibung von Vorschlägen beschrieben ist, die in Erwiderung auf das Auftreten eines Ereignisses gemacht werden sollen, einschließlich Vorschlägen, wenn ein mit dem Ereignis verknüpftes Profil mit dem Ereignis vorhanden ist, das genannte Profil zu starten und Vorschlägen,
wenn kein mit dem Ereignis verknüpftes Profil vorhanden ist, eine Anwendung zu starten, die mit dem Ereignis verknüpft ist,
eine Anwendungsausführungseinheit (107), die eingerichtet ist, in Erwiderung auf eine Startanfrage eine Anwendung zu starten und auszuführen, die in der Anwendungsspeichereinheit (108) gespeichert ist;
und
eine Anwendungsstartsteuereinheit (104), die eingerichtet ist, wenn sie feststellt, dass ein Profil vorhanden ist, das mit dem durch die genannte Ereigniserfassungseinheit erfassten Ereignis verknüpft ist, dem Nutzer einen Vorschlag zu machen, das genannte Profil auf einer Basis der genannten Ereignisverarbeitungsregeln zu starten, und wenn sie feststellt, dass kein Profil jedoch eine Anwendung vorhanden ist, die mit dem durch die genannte Ereigniserfassungseinheit erfassten Ereignis verknüpft ist, dem Nutzer einen Vorschlag zu machen, die genannte Anwendung auf einer Basis der genannten Ereignisverarbeitungsregeln zu starten, und die ausgebildet ist, eine an die genannte Anwendungsausführungseinheit Anfrage zu übermitteln, die genannte Anwendung zu starten, wenn der Vorschlag, die genannte Anwendung zu starten,
durch den Nutzer angenommen ist, oder eine Anwendung zu starten,
die in das genannte Profil registriert ist wie auch die Einstellungsinformation, die in das genannte Profil registriert ist, wenn der Vorschlag,
das genannte Profil zu starten, durch den Nutzer angenommen ist,
wobei, wenn eine Anzahl von Malen, dass der Vorschlag, eine Anwendung zu starten, angenommen wurde, größer wird als eine vorherbestimmte Anzahl von Malen, die Anwendungsstartsteuereinheit über die Nutzerschnittstelleneinheit einen Vorschlag macht, die genannte Anwendung in ein Profil zu registrieren, und, wenn der genannte Vorschlag angenommen ist, das Profil, in das die genannte Anwendung registriert ist, in der Profilspeichereinheit speichert.

2. Das Anwendungsausführungsendgerät nach Anspruch 1, **dadurch gekennzeichnet, dass** wenn der Vorschlag, entweder die Anwendung oder das Profil zu starten, abgelehnt wird, die Anwendungsstartsteuereinheit, die Ereignisverarbeitungsregeln derart ändert, dass die Anwendungsstartsteuereinheit keinerlei Vorschläge, entweder die Anwendung oder das Profil zu starten, macht in Antwort auf das Auftreten eines Ereignisses, das entweder der genannten Anwendung oder dem genannten Profil entspricht.

3. Das Anwendungsausführungsendgerät nach Anspruch 1, **dadurch gekennzeichnet, dass** eine Anzahl von Malen, dass der Vorschlag, das Profil zu starten, angenommen wurde, größer wird als eine vorbestimmte Anzahl von Malen, die Anwendungsstartsteuereinheit über die Nutzerschnittstelleneinheit einen Vorschlag macht, das genannte Profil automatisch zu starten, wenn ein entsprechendes Ereignis auftritt, und wenn der genannte Vorschlag angenommen wird, die Ereignisverarbeitungsregeln in einer derartigen Weise verändert, dass das genannte Profil in Antwort auf das Auftreten des genannten entsprechenden Ereignisses das genannte Profil automatisch startet.

## Revendications

1. Terminal d'exécution d'applications (100) comprenant :
une unité de traitement de contenu (101) configurée pour recevoir un contenu qui comprend des métadonnées multiplexées dans le contenu, extraire lesdites métadonnées et lire le contenu, et une unité d'interface utilisateur (109) configurée pour présenter à un utilisateur le contenu lu ;
une unité de détection d'événements (102) configurée pour détecter un événement, sur une base de règles de détection d'événements dans lesquelles des conditions de détection d'événements sont décrites pour divers événements, respectivement, dans les métadonnées extraites par ladite unité de traitement de contenu (101), qui correspond à l'une desdites conditions de détection d'événements ;
une unité de stockage d'applications (108) configurée pour stocker plusieurs applications associées à chacun des divers événements ;
une unité de stockage de profils (106) configurée pour stocker des profils dans chacun desquels sont enregistrées une application qui présente des informations qui se rapportent à l'événement correspondant, et des informations de réglage qui concernent cette application ;
une unité de stockage de règle de traitement d'événements (105) configurée pour stocker des règles de traitement d'événements dans lesquelles est décrite une description des suggestions qui doivent être faites en réponse à l'occurrence d'un événement, qui comprend des suggestions pour lancer ledit profil, si un profil associé à l'événement existe, et des suggestions pour lancer une application qui est associée à l'événement, si aucun profil associé à l'événement n'existe ;
une unité d'exécution d'applications (107) configurée pour lancer et exécuter une application stockée dans l'unité de stockage d'applications (108) en réponse à une demande de lancement ; et
une unité de commande de lancement d'applications (104) configurée pour suggérer à l'utilisateur de lancer ledit profil, si elle détermine qu'il existe un profil qui est associé à l'événement détecté par ladite unité de détection d'événements sur la base desdites règles de traitement d'événements, et configurée pour suggérer à l'utilisateur de lancer ladite application, si elle détermine qu'aucun profil n'existe mais qu'il existe une application associée à l'événement détecté par ladite unité de détection d'événements, sur la base desdites règles de traitement d'événements, et configurée pour transmettre une requête à ladite unité d'exécution d'applications pour lancer ladite application, si la suggestion de lancer ladite application est acceptée par l'utilisateur, ou une application enregistrée dans ledit profil ainsi que les informations de réglage enregistrées dans ledit profil, si la suggestion de lancer ledit profil est acceptée par l'utilisateur ;
dans lequel, quand un certain nombre de fois où la suggestion de lancer une application a été acceptée devient supérieur à un nombre de fois prédéterminé, l'unité de commande de lancement d'applications suggère d'enregistrer ladite application dans un profil par l'intermédiaire de l'unité d'interface utilisateur, et stocke dans l'unité de stockage de profils le profil dans lequel est enregistrée ladite application, lorsque ladite suggestion est acceptée.

2. Terminal d'exécution d'applications selon la revendication 1, **caractérisé en ce que**, lorsque la suggestion de lancer l'application ou le profil est refusée, l'unité de commande de lancement d'applications modifie les règles de traitement d'événements de telle manière que l'unité de commande de lancement d'applications ne fasse aucune suggestion visant à lancer l'application ou le profil en réponse à l'occurrence d'un événement qui correspond à ladite application ou audit profil.

3. Terminal d'exécution d'applications selon la revendication 1, **caractérisé en ce qu'**un certain nombre de fois où la suggestion de lancer le profil a été acceptée devient supérieur à un nombre de fois prédéterminé, l'unité de commande de lancement d'applications suggère de lancer automatiquement ledit profil par l'intermédiaire de l'unité d'interface utilisateur lorsqu'un événement correspondant se produit, et, lorsque ladite suggestion est acceptée, elle modifie
les règles de traitement d'événements de telle manière que ledit profil soit lancé automatiquement en réponse à l'occurrence dudit événement correspondant.
